# EUROPÄISCHE PATENTANMELDUNG

(11) **EP 1 369 172 A2**
(43) Veröffentlichungstag der Anmeldung: **10.12.2003**
(21) Anmeldenummer: 03012185.9
(22) Anmeldetag: 04.06.2003
(51) Int. Cl.: B01J 19/32

(54) **Packung für eine Kolonne**

(30) Priorität: 04.06.2002 DE 10224759
(71) Anmelder: BASF AKTIENGESELLSCHAFT, 67056 Ludwigshafen (DE)
(72) Erfinder: Haake, Mathias Dr., 68161 Mannheim (DE); Kaibel, Gerd Dr., 68623 Lampertheim (DE)
(74) Vertreter: Isenbruck, Günter, Dr.

(57) **Zusammenfassung**

Es wird eine Packung für eine Kolonne zur Durchführung einer Destillation oder Reaktivdestillation vorgeschlagen, die aus einem Raumkörper gebildet ist, der den Kolonnenquerschnitt weitgehend vollständig ausfüllt und der aus zwei oder mehreren unterschiedlich strukturierten Bahnen eines Vliesstoffes durch Aufwickeln oder Aufeinanderlegen erhalten wurde, und unter den Verfahrenbedingungen der Destillation oder Reaktivdestillation chemisch und mechanisch stabil ist.

## Beschreibung

Die Erfindung betrifft eine Packung für eine Kolonne zur Durchführung einer Destillation oder Reaktivdestillation sowie eine Verwendung.

In Destillationen bzw. Reaktivdestillationen, die in der Regel in heterogener Katalyse durchgeführt werden, wird zur Verbesserung des Stoff- und Wärmetransports eine möglichst große Phasengrenzfläche bzw., im Falle der Reaktivdestillationen, auch eine möglichst große Katalysatoroberfläche angestrebt. Hierfür werden unterschiedliche Einbauten, insbesondere Böden, Füllkörper oder Packungen eingesetzt, wobei Packungen in Kreuzkanalstruktur besonders verbreitet sind.

Zur Verbesserung der Stoffübergangs- und Katalysatoroberfläche in heterogen katalysierten Reaktivdestillationen wurde beispielsweise vorgeschlagen, die aktive Katalysatormasse direkt auf Packungen aufzubringen, die bezüglich ihrer Geometrie den aus der Destillationstechnik bekannten Bauformen entsprechen.

Die Bauform Katapak-M der Firma Sulzer AG, CH-8404 Winterthur ist ein Beispiel hierfür. Nachteilig für den breiten industriellen Einsatz ist, dass sich katalytisch aktive Massen häufig nicht mit der erforderlichen Abriebfestigkeit auf derartige Packungen aufbringen lassen.

Stärker verbreitet sind daher Packungen, die konventionelle teilchenförmige Katalysatoren verwenden. Die Katalysatorteilchen werden beispielsweise in Taschen aus Drahtgewebe eingebracht, die entweder direkt als Destillationseinbauten dienen, wie die Bauform Katapak-S der Firma Sulzer AG, CH-8404 Winterthur. Bekannt sind auch ebene Taschen, die zwischen die einzelnen Schichten der Destillationspackungen eingelegt werden, wie die Bauform Multipack der Firma Montz GmbH, D-40723 Hilden. Derartige Packungen sind jedoch störungsanfällig, da zur gleichmäßigen Durchströmung des Katalysators die jeweils erforderlichen Flüssigkeitsberieselungsdichten genau eingehalten werden müssen, was sich in der Praxis als schwierig erweist.

Die sogenannten Bales der Firma CDTech, Houston, USA, sind ähnlich aufgebaut, die Taschenstrukturen sind jedoch wesentlich gröber und die erzielbaren Trennstufen je Meter Kolonnenhöhe sind niedriger.

Darüber hinaus sind Einbauten für Reaktivdestillationen in Form von stabilen Formkörpern bekannt, beispielsweise die in US 5,235,102 beschriebenen extrudierten Monolithe aus Cordierit. Diese Monolithe, das heißt einstückige Formkörper, werden nach dem Stand der Technik als Extrudate gefertigt. Die Herstellung ist vergleichsweise aufwändig und erfordert teure und verschleißanfällige Maschinen. Nachteilig ist ferner, dass die Monolithe nur mit vergleichsweise kleinen Abmessungen bis zu etwa 0,2 m hergestellt werden können. Dies macht eine umständliche Nachbearbeitung erforderlich, um die einzelnen Monolithe mit der notwendigen Maßhaltigkeit fertig zu stellen, damit im Betrieb keine unerwünschten Maldistributionen der flüssigen und gasförmigen Phase auftreten.

Demgegenüber war es Aufgabe der Erfindung, eine Packung für eine Kolonne zur Durchführung einer Destillation oder Reaktivdestillation zur Verfügung zu stellen, die einfach und kostengünstig für die bevorzugt zylindrisch gebauten Destillations- oder Reaktivdestillationskolonnen mit nahezu beliebigem Durchmesser, im Bereich von etwa 0,05 bis 5 m, herstellbar ist.

Die Aufgabe wird durch eine Packung für eine Kolonne zur Durchführung einer Destillation oder Reaktivdestillation gelöst, die aus einem Raumkörper gebildet ist, der den Kolonnenquerschnitt weitgehend vollständig ausfüllt und der aus zwei oder mehreren unterschiedlich strukturierten Bahnen eines Vliesstoffes durch Aufwickeln oder Aufeinanderlegen erhalten wurde, und unter den Verfahrenbedingungen der Destillation oder Reaktivdestillation chemisch und mechanisch stabil ist.

Die Erfinder haben überraschend gefunden, dass entgegen der in Fachkreisen herrschenden Überzeugung, dass in Destillations- oder Reaktivdestillationskolonnen eine weitgehende oder nahezu vollständige Gleichverteilung des aufzutrennenden Stoffgemisches über den gesamten Querschnitt des Apparats erforderlich sei, nicht zwingend erfüllt sein muss. Es ist im Gegenteil möglich, für weniger anspruchsvolle Trennaufgaben die wirtschaftlich vorteilhaft herstellbaren erfindungsgemäßen Packungen einzusetzen, die auf einer Vliesstoffstruktur basieren.

Die erfindungsgemäßen Packungen sind technisch sehr viel einfacher und somit wesentlich kostengünstiger gegenüber bekannten extrudierten Monolithen herstellbar, ohne nachteilige Charakteristiken bezüglich der hydraulischen Widerstände, des Flüssigkeits-Hold-Ups und der Verweilzeitverteilung des Gases und der Flüssigkeit aufzuweisen.

Die erfindungsgemäßen Packungen sind in einfacher Weise, durch Aufwickeln oder Aufeinanderlegen von zwei oder mehreren unterschiedlich strukturierten Bahnen eines Vliesstoffes als Raumkörper herstellbar, die weitgehend dem Kolonnenquerschnitt anpassbar sind. Unter weitgehend wird vorliegend verstanden, dass keine exakte Anpassung an den Kolonnenquerschnitt erforderlich ist, sondern dass fertigungstechnische Toleranzen erlaubt sind. Die Anpassung der Geometrie des Raumkörpers an den Kolonnenquerschnitt soll Bypassströme des der Destillation oder Reaktivdestillation unterworfenen Stoffgemisches verhindern. Hierfür sind geringfügige Randspalte, die in der Regel 1 oder 2 mm nicht überschreiten, üblicherweise unschädlich.

Der Raumkörper ist bevorzugt als Rolle ausgebildet, die durch Aufwickeln von zwei oder mehreren unterschiedlich strukturierten Bahnen eines Vliesstoffes erhalten wurde. Möglich sind jedoch auch andere geometrische Formen, insbesondere eine durch Aufeinanderlegen von Bahnen erhaltene Quaderform.

Der Begriff Vliesstoff bezeichnet in bekannter Weise zu den (Textil)verbundstoffen zählende, flexible, poröse Flächengebilde, die nicht durch die klassische Methode der Gewebebindung von Kette und Schuss oder durch Maschenbildung, sondern durch Verschlingung und/oder kohäsive und/oder adhäsive Verbindung von (Textil)fasern hergestellt werden. Der Zusammenhalt ist im Allgemeinen durch die den Fasern eigene Haftung gegeben, wobei eine mechanische Verfestigung durch Vernadeln, Vermaschen oder durch Verwirbeln mittels scharfer Wasserstrahlen möglich ist. Adhäsiv verfestigte Vliese entstehen durch Verkleben der Fasern mit flüssigen Bindemitteln oder durch Schmelzen bzw. Auflösen von sogenannten Bindefasem, die dem Vlies bei der Herstellung beigemischt werden (nach Römpp Chemie Lexikon, 9. Auflage, Seite 4955).

Für die Herstellung einer erfindungsgemäßen Packung wird von einem Vliesstoff ausgegangen, der in Form von Bahnen in handhabbarer Breite, in der Regel zwischen 0,05 m und 5 m, und in theoretisch endloser Länge vorliegt.

Es wird von zwei oder mehreren Bahnen ausgegangen, die unterschiedlich strukturiert sein müssen, das heißt unterschiedlich hohen Grad an Welligkeit aufweisen. Hierbei ist es möglich, eine erste Vliesstoffbahn mit ebener Struktur zu belassen. Eine zweite Bahn wird in gewellter oder geknickter Form gefertigt, das heißt mit regelmäßigen Wellen oder Knicken strukturiert, entsprechend den in der Destillationstechnik bekannten Packungen aus Metallblechen.

Durch Aufwickeln von zwei oder mehreren unterschiedlich strukturierten Bahnen eines Vliesstoffes wird eine Rolle erhalten, deren Umfang problemlos in der Weise gesteuert werden kann, dass er dem Innendurchmesser der Kolonne entspricht, für deren Einsatz die Packung bestimmt ist.

Es ist ebenso problemlos, die gewünschte Höhe der Packung in der Weise zu steuern, dass von Bahnen entsprechender Breite zur Bildung der Rolle ausgegangen wird.

Der Verfahrenstechniker wird den Raumkörper, insbesondere die Rolle bzw. den sie bildenden Vliesstoff in der Weise auswählen, dass die chemische und mechanische Stabilität unter den Verfahrensbedingungen der Destillation oder Reaktivdestillation gegeben ist. Es ist bekannt, dass sich Vliesstoffe aufgrund der Vielzahl der zur Verfügung stehenden Rohstoffe, der Kombinationsmöglichkeiten und Verfestigungstechniken mit beliebigen, zwecksspezifischen Eigenschaften gezielt herstellen lassen (vgl. Römpp Chemie Lexikon, wie oben zitiert).

Es ist auch möglich, die Packung aus einem Raumkörper, insbesondere aus einer Rolle zu bilden, der (die) aus zwei gewellten oder geknickten Bahnen besteht, mit unterschiedlichem Neigungswinkel der Wellen oder Knicke zur Längsachse der Bahn oder mit gleichem Neigungswinkel der Wellen oder Knicke, jedoch mit umgekehrten Vorzeichen und/oder mit unterschiedlicher Tiefe der Wellen oder Knicke.

Durch die besonders bevorzugte Ausbildung der Bahnen mit gleichem Neigungswinkel der Wellen oder Knicke, jedoch mit umgekehrten Vorzeichen, wird eine Struktur ähnlich der Kreuzkanalstruktur bekannter Destillationspackungen erreicht. Der Neigungswinkel der Knicke oder Wellen zur Längsachse der Bahn(en) kann im Bereich von 10 bis 90°, bevorzugt im Bereich von 10 bis 80°, besonders bevorzugt im Bereich von 30 bis 60°, liegen. Es ist somit möglich, durch einfache Strukturierung der Vliesstoffbahn(en) weitgehend beliebige Neigungswinkel der Knicke oder Wellen zu prägen, mit der Folge, dass in der fertigen Packung entsprechende Strömungskanäle entstehen, die zur Längsrichtung der Packung geneigt sind. Dadurch wird ein verbesserter Queraustausch der flüssigen und insbesondere auch der gasförmigen Phase erreicht, mit der Folge einer Vergleichmäßigung der Strömungen und der sich einstellenden Konzentrationsverläufe.

In einer speziellen Ausführungsform ist es möglich, den Neigungswinkel der Wellen oder Knicke zur Längsrichtung der Bahn mit 90° auszubilden.

Bevorzugt können eine oder mehrere Bahnen Perforationen aufweisen. Durch diese Maßnahme werden benachbarte Strömungskanäle teilweise strömungsdurchlässig verbunden, mit der Folge einer zusätzlichen Verbesserung des Queraustausches von Gas und Flüssigkeit. Dadurch wird eine Geometrie der Strömungskanäle erreicht, die in den Grundzügen den in der Destillationstechnik bevorzugt eingesetzten Kreuzkanalpackungen entspricht.

Es ist bevorzugt möglich, eine Packung in der Weise auszubilden, dass eine oder mehrere Scheiben aus dem Raumkörper, insbesondere aus der Rolle durch mechanische Abtrennung senkrecht zur Wickelrichtung abgetrennt werden. Dadurch kann in einfacher Weise eine Packung in einer für den jeweiligen Einsatzzweck optimalen Höhe erhalten werden.

Zur weiteren Verbesserung des Queraustausches über den Packungsquerschnitt ist es möglich, die Packung aus mehreren Elementen auszubilden, die durch mechanische Zerteilung aus der Rolle oder aus der oder den Scheiben erhalten und die dergestalt zusammengesetzt werden, dass sie den Kolonnenquerschnitt vollständig ausfüllen, wobei benachbarte Elemente bevorzugt gegeneinander verdreht, insbesondere um jeweils 90° verdreht, sind.

Der Vliesstoff, der Grundlage für den die Packung bildenden Raumkörper ist, kann grundsätzlich aus jedem Werkstoff bestehen, der unter den Verfahrensbedingungen der konkreten Destillation oder Reaktivdestillation chemisch und mechanisch stabil ist. Er kann bevorzugt aus einem keramischen Material, aus einem oder mehreren Kunststoffen, oder aus Kohlenstoff gebildet sein. Als keramische Materialien kommen beispielsweise Aluminiumoxid und/oder Siliziumdioxid, insbesondere Gewebe aus Asbestersatzstoffen in Frage. Als Kunststoffe können beispielsweise Polyamide, Polyester, Polyvinyle, Polyethylen, Polypropylen, Polytetrahydrofluorethylen usw. eingesetzt werden.

Es ist möglich, den Vliesstoff mittels eines katalytisch aktiven oder inaktiven Binders zu verfestigen, insbesondere mittels eines Protonenakzeptors oder Protonendonators. Es ist 5 somit möglich, unterschiedlichste katalytisch aktive Materialien in den Vliesstoff in einfacher Weise und mit ausgezeichneter Haftung einzubringen. Der Binder kann beispielsweise aus einem oder mehreren der nachfolgend aufgeführten Stoffe gebildet sein: Silikate, Aluminate, Zinkoxid, Magnesiumoxid, Titandioxid, Zirkoniumdioxid, Aluminiumoxid, Lanthanid-Oxide, Silizium-Oxinitride oder Spinelle.

Es ist auch möglich, die Vliesstoffbahnen und/oder den daraus gebildeten Raumköprer mit katalytisch aktivem Material zu behandeln, insbesondere zu tränken, zu tauchen oder zu besprühen.

Gegenstand der Erfindung ist auch die Verwendung eines Raumkörpers, insbesondere einer Rolle, der (die) aus zwei oder mehreren unterschiedlich strukturierten Bahnen eines Vliesstoffes gebildet ist, als Packung für eine Kolonne zur Durchführung einer Destillation oder Reaktivdestillation.

## Patentansprüche

1. Packung für eine Kolonne zur Durchführung einer Destillation oder Reaktivdestillation, **dadurch gekennzeichnet, dass** sie aus einem Raumkörper gebildet ist, der den Kolonnenquerschnitt weitgehend vollständig ausfüllt und der aus zwei oder mehreren unterschiedlich strukturierten Bahnen eines Vliesstoffes durch Aufwickeln oder Aufeinanderlegen erhalten wurde, und unter den Verfahrenbedingungen der Destillation oder Reaktivdestillation chemisch und mechanisch stabil ist.

2. Packung nach Anspruch 1, **dadurch gekennzeichnet, dass** der Raumkörper eine Rolle ist, die aus zwei oder mehreren unterschiedlich strukturieren Bahnen eines Vliesstoffes durch Aufwickeln erhalten wurde.

3. Packung nach Anspruch 1 oder 2, **dadurch gekennzeichnet, dass** der Raumkörper aus zwei Bahnen gebildet ist, wobei eine Bahn eben und die andere Bahn gewellt oder geknickt ist.

4. Packung nach Anspruch 1 oder 2, **dadurch gekennzeichnet, dass** der Raumkörper aus zwei gewellten oder geknickten Bahnen gebildet ist, mit unterschiedlichem Neigungswinkel der Wellen oder Knicke zur Längsachse der Bahn oder mit gleichem Neigungswinkel der Wellen oder Knicke, jedoch mit umgekehrtem Vorzeichen, und/oder mit unterschiedlicher Tiefe der Wellen oder Knicke.

5. Packung nach einem der Ansprüche 3 oder 4, **dadurch gekennzeichnet, dass** der Neigungswinkel der Knicke oder Wellen zur Längsachse der Bahn(en) im Bereich von 10 bis 90°, bevorzugt im Bereich von 10 bis 80°, besonders bevorzugt im Bereich von 30 bis 60°, liegt.

6. Packung nach Anspruch 3, **dadurch gekennzeichnet, dass** der Neigungswinkel der Wellen oder Knicke zur Längsrichtung der Bahn 90° beträgt.

7. Packung nach einem der Ansprüche 1 bis 6, **dadurch gekennzeichnet, dass** eine oder mehrere Bahnen Perforationen (aufweist) aufweisen.

8. Packung nach einem der Ansprüche 2 bis 7, dass sie aus einer oder mehreren Scheiben besteht, die aus der Rolle durch mechanische Abtrennung senkrecht zur Wickelrichtung erhalten wurden.

9. Packung nach einem der Ansprüche 1 bis 8, **dadurch gekennzeichnet, dass** sie aus mehreren Elementen besteht, die durch mechanische Zerteilung aus dem Raumkörper, insbesondere aus der Rolle oder aus der (den) Scheibe(n) erhalten und die anschließend dergestalt zusammengesetzt werden, dass sie den Kolonnenquerschnitt weitgehend vollständig ausfüllen, wobei benachbarte Elemente bevorzugt gegeneinander verdreht, insbesondere um jeweils 90° verdreht, sind.

10. Packung nach einem der Ansprüche 1 bis 9, **dadurch gekennzeichnet, dass** der Vliesstoff aus keramischem Material, aus einem oder mehreren Kunststoffen, oder aus Kohlenstoff gebildet ist.

11. Packung nach einem der Ansprüche 1 bis 9, **dadurch gekennzeichnet, dass** der Vliesstoff mittels eines katalytisch aktiven oder inaktiven Binders verfestigt ist, insbesondere mittels eines Protonenakzeptors oder Protonendonators.

12. Packung nach einem der Ansprüche 1 bis 11, **dadurch gekennzeichnet, dass** der Binder aus einem oder mehreren der nachfolgend aufgeführten Stoffe gebildet ist: Silikate, Aluminate, Zinkoxid, Magnesiumoxid, Titandioxid, Zirkoniumdioxid, Aluminiumoxid, Lanthanid-Oxide, Silizium-Oxinitride oder Spinelle.

13. Packung nach einem der Ansprüche 1 bis 12, **dadurch gekennzeichnet, dass** die Bahnen und/oder der Raumkörper mit katalytisch aktivem Material behandelt, insbesondere getränkt, getaucht oder besprüht sind (ist).

14. Verwendung eines Raumkörpers, insbesondere einer Rolle, die aus zwei oder mehreren unterschiedlich strukturierten Bahnen eines Vliesstoffes gebildet ist, als Packung für eine Kolonne zur Durchführung einer Destillation oder Reaktivdestillation.
